# EUROPEAN PATENT APPLICATION

(11) **EP 2 154 228 A1**
(43) Date of publication of application: **17.02.2010**
(21) Application number: 08173045.9
(22) Date of filing: 29.12.2008
(51) Int. Cl.: C10L 5/46, C10L 9/10, C02F 11/04

(54) **Method for utilisation of sewage sludge integrated with energy recovery**

(30) Priority: 13.06.2008 PL 38543208
(71) Applicant: Politechnika Lubelska, 20-219 Lublin (PL)
(72) Inventor: Pawlowski, Lucjan, 20-710 Lublin (PL); Pawlowska, Malgorzata, 20-710 Lublin (PL); Wojcik, Waldemar, 20-640 Lublin (PL); Fijalka, Tadeusz, 20-807 Lublin (PL); Pilipczuk, Ireneusz, 20-127 Lublin (PL)
(74) Representative: Kaminski, Piotr

(57) **Abstract**

A method for sewage waste utilization integrated with energy recovery where the sewage sludge after methane fermentation is subjected to drying to obtain product of dry contents of at least 90%, and then it is mixed with fine coal at the ratio not higher than 5:95, preferably 3:95 and subsequently obtained mixture is directed to a ball mill, in which the mixture is comminuted to dust of a diameter of at least 0,1 mm and in the form of dust it is delivered to lower low-emission spin-type burner installed in lower part of the boiler. Obtained dust is introduced in the boiler producing steam to drive turbines in power station.

## Description

The present invention relates to a method for utilisation of sewage waste integrated with energy recovery.

Sewage sludge created in the process of waste treatment pose a serious problem. Most favourable method for waste management is its use in agriculture as a fertilizer.

Crude sludge is characterised by unpleasant odour and also contains pathogenic bacteria and pathogens, which is why it requires sanitization which can be carried out by mixing of initially dehydrated sludge with quicklime.

Quicklime reacts with water contained in the sludge according the following reaction:

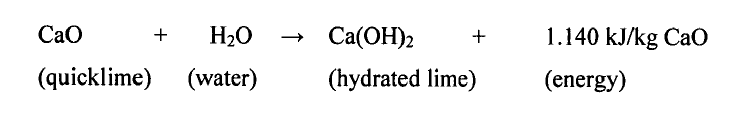

Quicklime absorbs in the process of hydration 32% of water relative to its mass. In this reaction the temperature rises. In case where temperature reaches value above 55°C, complete sanitization of the sludge occurs after 75 min. To obtain such conditions more than 50% of CaO relative to sludge mass should be added. At lower doses of CaO, i.e. below 20%, the sanitization time lengthens to 3 months.

The main disinfecting agent in this case is the alkaline environment (pH>12). The process can be accelerated by heating the mixture of sludge and lime to the temperature above 55°C.

In literature (in: Irradition. Wang, Lawrance K.; Chen, J. Paul; Ziegler, Robert C. Lenox Institute of Water Technology, Lenox, MA, USA. Handbook of Environmental Engineering (2007), 107-134, Publisher: Human Press Inc.) one can find disclosures of sanitization of sludge by means of electron beam or microwaves. So treated sewage sludge can be applied as a fertilizer provided, that it does not contain heavy metals, which accumulate in the fertilized soil.

Sanitized sewage sludge can also be used as loose layer on communal waste dump.

Other known method for sanitization of crude sewage sludge is methane fermentation, which occurs in temperature 35-37 °C and also leads to biogas production. From one kg of dry mass of sludge about 0,33 m³ of biogas containing 60-70% of methane is produced. This method allows for energy recovery in form of biogas produced from part of biomass undergoing methane fermentation.

The problem of sludge management still remains. When it cannot be used in agriculture as a fertilizer, it is stored or burnt.

Trials of so-called wet burning have been carried out - oxidation according to US patent 4744909, where sludge is mixed with small amounts of ions of catalyst Mn(IV) or Ce(IV) and oxidizing agents such as oxygen, ozone, hydrogen peroxide.

Other method was presented in patent GB 1435105. Sewage sludge is forced into cylindrical reactor, divided into four segments. In each segment the sludge is mixed with oxidizing agent, for example air, by means of paddle agitator. Reaction of oxidation of organic compounds contained in the sewage sludge occurs in temperature 215°C-27°C and at 1,8 ≤ pH ≥ 4,0.

Yet another method was presented in US patent 3912626. To sewage sludge salts of copper or silver are introduced as catalyst. They are subsequently recovered and re-used. Reaction of oxidation is carried out in temperature of 150-340°C and pressure 14-280 atm.

Different method was described in patent DE 2247841, where the sludge was forced through cylindrical vertical reactor, with a stop time of 1-30 min., temperature 204-246°C, 2,0 ≤ pH ≥ 7,0 and intensive mixing with air.

The drawbacks of the methods consisting in so-called wet sewage sludge oxidation are that even though they allow for removal of organic substances, there still remain large quantities of hydrated sludge, the management of which poses problems.

Sewage sludge is also subjected to burning in furnaces especially designed for that purpose. Sludge for burning should contain not less than 30% of dry mass. The burning is carried out in the temperature of 1100 °C. The flue gas purification poses the problem, because it may contain chlorinated hydrocarbons. Also a problem is a production of large quantities of ash, i.e. about 20% relative to sewage sludge mass.

The most beneficial direction for managing the sewage sludge, especially in cases where it cannot be used in agriculture, is its processing into alternative fuel. A method for alternative fuel production was presented in Korean patent KR2003039067 and it involved forming of briquettes from the mixture of peat, sewage sludge and zeolite in weight ratio of 65:25:10.

Different method was proposed in Dutch patent NL8501083, where the sludge was dehydrated in the temperature 80-120°C and subsequently mixed with cellulose containing material, for example sawdust, tobacco dust, cotton waste. Also other binding agents such as melas, polyvinyl alcohol, can be mixed with sludge. The mixture is formed into briquettes of calorific value of 6,3 MJ/kg.

Japanese patent JP61093309 describes a method allowing for production of alternative fuel of calorific value of 6000Kcal/kg by mixing coke obtained during oil refining with sewage sludge in ratio of 2:1.

US patent 4552666 presents a method where sewage sludge is mixed with dried and milled tree leaves. Formed briquettes had calorific value of about 18Mj/kg.

The drawback of presented methods for producing alternative fuel from sewage sludge is that to form briquettes other components have to be delivered to production plant.

The essence of the method for sewage sludge utilization integrated with energy recovery is that the sewage sludge after methane fermentation are subjected to drying to obtain product of dry contents of at least 90%, and then it is mixed with fine coal at the ratio not higher than 5:95, preferably 3:95 and subsequently obtained mixture is directed to a ball mill, in which the mixture is comminuted to dust of a diameter of at least 0,1 mm and in the form of dust it is delivered to lower low-emission spin-type burner installed in lower part of the boiler. Obtained dust is introduced in the boiler producing steam to drive turbines in power station.

Advantageous effect of the invention is that after dehydration of sludge and mixing it with fine coal one obtains alternative fuel for use in firing boilers in power station.

### Example.

Fermented sludge from communal waste treatment plant having dry mass content of about 15% was delivered to drum drier, where sludge was dried to obtain dry mass content of above 90% (on average 94%). Next the sludge was mixed with fine coal in ratio of 3:95 and directed to ball mill, after milling in ball mill to obtain grains of φ 1,5 mm it was delivered to lower low-emission spin-type burner installed in lower part of the boiler.

Combustion gases were analyzed. The composition of combustion gases before introduction of 3% of sewage sludge of dry mass content of 90% and after introduction is shown in table.

| Type of pollutant | Pollution concentration during burning coal only | Pollution concentration during burning of coal and 3% mass part of sewage sludge |
|---|---|---|
| | [mg/m³ᵤ] | [mg/m³ᵤ] |
| Carbon monoxide CO | 2 ö 12 | 5.0 ö 10 |
| Sulphur dioxide SO₂ | 70ö280 | 170ö275 |
| Nitrogen oxides NO₂ | 130ö200 | 160ö170 |
| Dust overall | 4ö19 | 5.0ö6.0 |
| Hydrogen fluoride HF | 1ö4 | 1.0ö3.0 |
| Hydrogen chloride HCl | 1ö8 | 0.6ö2.5 |
| Total organic carbon TOC | 0.8ö 1.1 | 0.4ö1.4 |
| Cadmium and Thallium Cd + Tl | < 0.005 | < 0.006 |
| Mercury Hg | 0.0002ö0.014 | 70ö0.010 |
| Heavy metals: Cb, As, Pb, Cr, Co, Cu, Mn, Ni, V, Sn | <0.070 | < 0.070 |
| Dioxins, furans [ng I-TEQ/m³] | <0.006 | <0.006 |

## Claims

1. A method for sewage waste utilization integrated with energy recovery **characterized in that** the sewage sludge after methane fermentation is subjected to drying to obtain product of dry contents of at least 90%, and then it is mixed with fine coal at the ratio not higher than 5:95, preferably 3:95 and subsequently the obtained mixture is directed to a ball mill, in which the mixture is comminuted to dust of a diameter of at least 0,1 mm and in the form of dust it is delivered to lower low-emission spin-type burner installed in the lower part of the boiler.

2. A method for sewage waste utilization integrated with energy recovery **characterized in that** obtained dust is introduced in the boiler producing steam drive turbines in power station.
